# EUROPEAN PATENT APPLICATION

(11) **EP 4 136 977 A1**
(43) Date of publication of application: **22.02.2023**
(21) Application number: 21772397.2
(22) Date of filing: 15.03.2021
(51) Int. Cl.: A21D 8/02, A21D 13/02, A21D 2/36

(54) **METHOD FOR PRODUCING BREAD AND BAKED GOODS**

(30) Priority: 16.03.2020 RU 2020110916
(71) Applicant: "Partner-M", R-n Maloyaroslavetskiy, g. Maloyaroslavets, 249096 (RU)
(72) Inventor: PONOMAREV, Vasiliy Vasilevich, Moscow, 119049 (RU); BIKBOV, Takhir Mukhammedovich, Moscow, 113463 (RU); MORDAEVA, Nataliya Aleksandrovna, Moskovskaya obl., 142400 (RU)
(74) Representative: Bucher, Ralf Christian
(86) International application number: PCT/RU2021/000105
(87) International publication number: WO 2021/188014

(57) **Abstract**

The invention relates to the food industry. A method of producing bread and bakery products comprises: combining dry and liquid dough components, mixing, product shaping and baking. After having mixed the components, a texturate comprised of flour, semolina, grains or products of intermediate processing of cereals, legumes, oil bearing crops, dried vegetables, fruit and berries, or mixtures thereof is added to the dough in an amount of 10-80% of the dry components' weight. The texturate has a granular structure with a granule size of 0.3-10 mm, preferably 2-7 mm, with a pore volume constituting 30-80% of a granule's total volume, preferably 40-70%, and with a bulk density of 50-350 kg/m³, preferably 90-200 kg/m³. By using the invention, the bread and bakery product production duration may be reduced, a good product shape stability may be provided, crumb hardness may be adjusted, and bread quality may be improved.

## Description

### Technical Field

The invention relates to the food industry and, in particular, to the bread and pastry sector, and may be used to produce bread, bakery products and pastries.

### Background Art

Adding various extruded grain and grain legume additives as additional ingredients to confer a specific flavor or texture to a new product with such additive has been known in the art. The bread and pastry production sector is a field with good prospects for employing such ingredients due to the possibility of producing extrudates from raw materials, both conventional and non-conventional for bread baking, and to a wide range of goods. It has also been known to use conventionally produced bread rejects in bakery product formulations, where substandard and unsold bread is dried and crushed into crumbs which are introduced into dough for production waste recycling and reduction.

Development of various plant-based texturates for use as semi-finished products in various sectors of the food industry is a promising way to address the pressing problem of protein shortage. A large proportion of textured edible materials currently in use in the food industry is produced from multiple types of agricultural raw materials with the use of thermoplastic extrusion process, either single-screw or twin-screw. By selecting the extrusion parameters, such as screw configuration, screw rotation speed, shearing forces and pressure inside an extruder barrel, external heat and water supply into the paste to be extruded, both the appearance and shape of a product exiting a nozzle, and the product's micro- and macrostructure parameters may be adjusted. Various extruded product producing methods are known from Patents RU2581223, RU2313953, RU2389346, etc. Water superheating and high pressure generation in an extruder barrel causes a product exiting a die to 'explode' and to form a porous structure which significantly accelerates water absorption when subsequently used in bread production processes. The output product parameters also depend on raw material composition and water content of the paste to be extruded. Starch and protein xerogel swelling and microporosity make the resulting granule capable of binding and capillarily retaining an extra amount of water, which may not be achieved without extrusion treatment of a raw material.

Some known methods of producing bread and bakery products comprise using various extruded groats, flours and other intermediary products of plant raw material processing. Extruded groats and flours not only retain all nutritional properties of the original groats, but are also superior to them in the preservation of nutritional components, most particularly the vitamins. Extruded groats and flours do not require any heat treatment, such as cooking, and are ready for immediate use, thus making it possible to preserve vitamins which are inevitably lost when groats are heat treated. High consumer properties of the resulting bread are also due to its increased nutritive value, such as starch availability. When a groat raw material is being extruded, starch undergoes specific changes, increasing its availability for a human body due to unique conditions, such as low water content and a relatively high temperature, created during the extrusion process for dry gelation of starch. Bread organoleptic properties, such as taste, aroma, color, crumb softness and doneness, are improved. In addition to starch gelation, the protein component of the extruded raw material also undergoes changes, such as protein denaturation and native structure unfolding, which also increase the protein digestibility for human digestive enzymes. By using textured products, dough viscosity and shape stability may be improved and moisture losses may be reduced due to the extruded raw materials' high water binding ability.

For example, RF Patent No.2405312, pubd. 10.12.2010 discloses a method of producing bread, the method comprising the steps of: dough making from high quality wheat flour, pressed bakers' yeast, salt, water, and a buckwheat derived product, dough fermentation, handling, proofing and baking, wherein the buckwheat derived product is pre-ground buckwheat groats used in an amount of 5-7% of high quality wheat flour. By using the method, the bread production process labor intensity and duration may be reduced by obviating the need for the buckwheat derived product heat pre-treatment and by using a straight dough process for bread production.

One known method of producing bread (RF Patent No.235082, pubd. 27.03.2009) comprises dough producing by a sponge dough or a straight dough processes. The sponge dough process includes making a starter dough by using a portion of high quality wheat flour, pressed bakers' yeast and water and leaving the starter dough to ferment. Then dough is made from the starter dough, salt, water, extruded rice groats and the other portion of high quality wheat flour. The straight dough process includes making dough from top-grade wheat flour, compressed bakers' yeast, salt, water and extruded rice groats. The dough is left to ferment and then delivered for handling, proofing and baking. The extruded rice groats are added in an amount of 5-7% of the total top-grade wheat flour weight. As a result, the bread specific volume and porosity are increased and the product nutritive value is improved.

The closest prior art is a method of producing bread known from Patent BY19799, pubd. 28.02.2016, comprising: making a dough by adding ingredients according to a recipe, leaving it to ferment, handling, shaping, proofing and baking, wherein the dough is made by using saccharified, turned sour and fermented brew, and wherein the dough is added with a bread cereal based extruded flour with a particle size of 0.125 - 0.152 mm and a water binding ability of 200-400% in an amount of 1.0-16.0 % of the flour weight according to the recipe. The extruded flour in the prior art method is produced by hydrobarothermal processing (extrusion), i.e. by continuous extrusion of a groat material through dye holes of a certain size at a temperature of 130-150°C, a pressure of 2-25 MPa and a humidity of 10-20%, the output product being in the form of an expanded rope (strand) or sticks which are then crushed and sieved to produce flour of a desired particle fineness. By using the method, the finished product volume may be increased, organoleptic properties may be improved, and the malt bread storage life may be extended.

All prior art methods of using extruded products for bread and bakery product production are time consuming; specifically, all prior art methods include such steps as fermentation, holding, maturation, proofing and similar processes to provide for the finished product volume and porosity, where a conventional baking method is used. To produce a bread of customary structure, the fermentation step includes using bakers' yeast producing carbon dioxide as a metabolite, which takes a long time to achieve porosity. A similar effect may be obtained by using chemical leavening agents including components which, upon interaction with water, release carbon dioxide as a chemical reaction product, or by using thickening/emulsifying agents (egg components, gums, beta glucans) and other components with functional/technological properties creating and maintaining a pre-determined structure. Where the leavening agents are used, time expenditures may be lower than where yeast is used; however, they give a 'chemical' or 'soapy' flavor to the products. If other agents are used, it results in a longer list of ingredients on the product packaging, in many cases showing E-numbered ingredients which are negatively viewed by consumers.

The prior art solutions involve using an extrudate in form of ground fraction (extruded flour), thus necessitating an additional process operation and increasing the extruded raw material production costs due to the need to grind it for bread production. Furthermore, a ground extruded raw material does not have a pronounced ability to maintain a voluminous/porous structure, thus necessitating the use of yeast, leavening and other agents in a formulation for this purpose. According to the prior art solutions, the quantity of an extrudate included into a formulation does not exceed 16 % wt., which may not be sufficient to exert a full effect on the dough and finished product rheology and nutraceutical properties.

### Summary of the Invention

The objects achieved by the present invention are as follows: the duration of bread and bakery product production is reduced by excluding or reducing such process operations as maturation, proofing, fermentation; the bread composition may be flexibly adapted to various needs (gluten-containing, gluten-free, enriched); use of yeast for baking may be avoided; the need to use baking pans is obviated due to a good bakery product shape stability (as the dough for gluten-free bread types is very weak, it is impossible to bake it without a pan); the crumb hardness may be adjusted, which is important for bread and bakery products sold sliced; various useful components may be added; no special-purpose equipment is required; bread quality is improved through enhancing its bioavailability, organoleptic properties (products produced by the claimed method are also characterized by an original crispy crust) and physical/chemical performance. Thus, by using various raw materials for extrusion, products with a lower glycemic index, with a higher resistant starch content, with soluble and insoluble dietary fibers, protein, micronutrients, and pectin may be produced, and postprandial glycaemia may be reduced.

By using a textured raw material with a microbial content significantly lower than that of conventional, not thermally treated, flour, the product microbiological cleanliness period may be extended such as to delay the growth of mold, rope-producing bacteria and other typical bread and bakery product spoilage microorganisms; specifically, mold formation may be delayed from 8 days as in conventional products to 12-18 days in the products containing textured flour without adding any preservation agents or using modified packaging.

Extrudates produced from raw materials with a higher protein content offer wide opportunities to enrich bread and bakery products with said valuable food component and to adjust the product's amino acid profile to meet an optimum amino-acid score. Improvements caused by the extrusion process in starch and protein components in terms of enhanced availability make it possible for a consumer to receive more nutraceuticals when consuming bread and bakery products produced in accordance with the present invention. Structural changes in starch and protein molecules in the course of extrusion enhance their susceptibility to both individual enzymes (introduced as part of the dough making process and those acting in a human body), and the enzymes produced by microorganisms contained in starters and yeasts.

The claimed technical result is achieved by a method of producing bakery products, the method comprising: combining dry and liquid dough components, mixing, product shaping and baking, wherein, after having mixed the components, a texturate comprised of flour, semolina, grains or products of intermediate processing of cereals, legumes, oil bearing crops, dried vegetables, fruit and berries, or mixtures thereof is added to the dough in an amount of 10-80% of the dry components' weight, the texturate having a granular structure with a granule size of 0.3-10 mm, preferably 2-7 mm, with a pore volume constituting 30-80% of a granule's total volume, preferably 40-70%, and with a bulk density of 50-350 kg/m³, preferably 90-200 kg/m³. Therein, the texturate may be produced from either a single raw material, or from a mixture of various flours; furthermore, the extruded mixture may further comprise components exhibiting a high biological activity.

Preferably, the porous raw material (the texturate) is added in an amount of 20-70% of the dry components' weight to produce bakery products with an internal structure and distinctive organoleptic characteristics similar to those of the products produced by conventional production methods.

Preferably, the finished dough has a density of 470-1300 kg/m³, while a baked finished product has structural/mechanical characteristics present in conventional products.

A yeast or non-yeast starter may be added to the dough, as well as other components of similar purpose used in traditionally produced bakery products to give a flavor and aroma characteristic of yeast-leavened, sourdough or conventional bakery products.

As a result of using a textured raw material, the dough produced for subsequent shaping has a voluminous shape, is porous, and either does not have to be subjected to any fermentation, holding, maturation, proofing processes or similar process operations providing for the voluminosity and porosity of conventionally baked finished products, or the duration of such processes is substantially reduced or may be reduced depending on the process task, while the amount of yeast in the formulation may be substantially reduced. The method of the present invention, in contrast to those utilizing fine fractions of textured flour, involves using a granulated raw material, preferably with a size of 2-7 mm, with a porosity pre-created through extrusion. By using the method of the present invention, a product may be shaped by large granules of the texturate forming a hard `skeleton' of the product, which in the conventional bread producing methods is achieved through a three-dimensional gluten network formation and filling with carbon dioxide bubbles from the fermentation process, whereby it somewhat `inflates' and pores are formed, and the product shape is maintained by fixing the gluten network and starch integrated thereto through thermal treatment (baking). According to the method of the present invention, the shape is pre-determined by the granules as such at the mixing and shaping steps.

A raising agent or other components influencing the dough and the product structure may be added to the dough.

The dry components include flour, semolina, grains, cereal bran, legume bran, oil bearing crop bran, with added dried vegetables, fruit and berries or a mixture thereof, either as individual components, or in the form of a mixture, with added vital and essential nutrients. Herein, the employed dry components, including the texturate, may be produced with added coloring agents, specific flavoring components, either gluten-containing, or gluten-free. The texturate may be homogenous or may be a heterogeneous mixture of various textured porous raw material types.

In contrast to the prior art production methods, where an extruded raw material is used in the form of a ground ingredient which is pre-treated through extrusion to improve the efficiency of the fermentation work done by added yeast, the present invention provides for using an extruded raw material in the form of granules retaining their extruded voluminous structure. Herein, yeast or chemical leavening agents may either not be used, or used in a significantly reduced amount. Yeast may be added to the formulation to create a customary taste and aroma of yeast-leavened bakery products and to expand the product range; herein, further to reducing the yeast content in the formulation, the duration of holding thereof in the dough may also be substantially reduced as compared with a conventional technique.

According to the present invention, by using a volumetrically textured raw material, i.e. a texturate, the product moisture content and yield per dry matter used in the product production process may be increased, thus providing an economic benefit from the present invention. Due to the increased moisture content, a baked product crumb remains soft till its expiry date. The bread and bakery product structure and consumer properties are primarily determined by the added texturate characteristics and volume ratio. The approach of the present invention provides a fundamentally changed bread production method and enables achievement of an operational benefit. Prior to or after baking, the products are dusted with, and/or poured on with, and/or filled with flavor and aroma improving and/or modifying compounds, and the products are scored to provide external decoration.

### Brief Description of the Figures

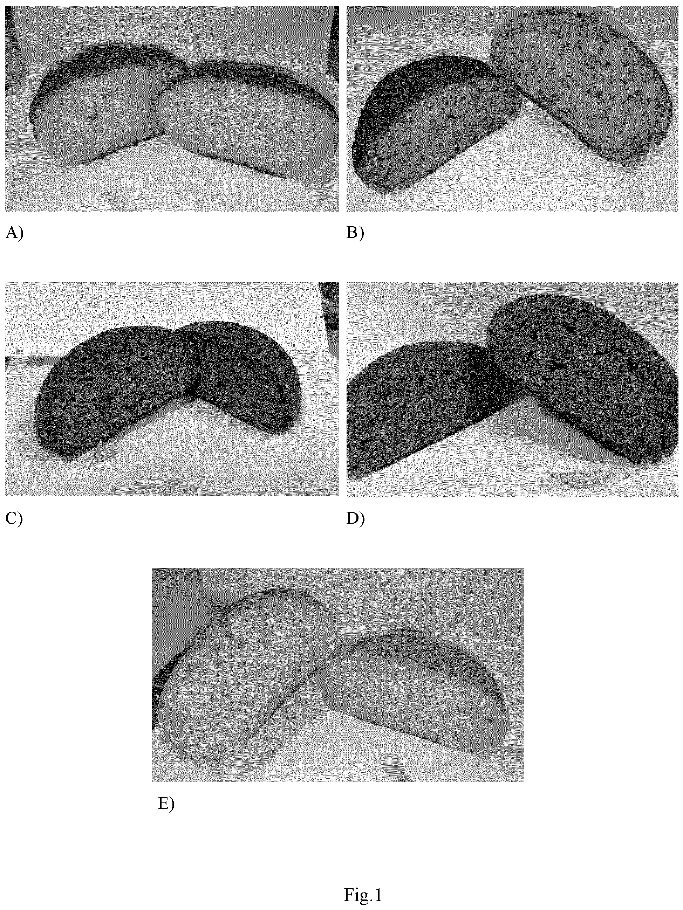

Figure 1 shows photographic external views of bakery products produced in accordance with the present invention from various textured raw material types.
A) Bread with added textured whole-grain wheat flour according to Example 1.
B) Bread with added textured whole-grain wheat flour with added wheat bran according to Example 3.
C) Bread with added textured whole-grain wheat flour with added wheat bran according to Example 4.
D) Bread with added textured whole-grain rye flour according to Example 5.
E) Bread with added textured wheat flour according to Example 2.

### Example Embodiments of the Invention

### Example 1.

The bread and bakery product production process cycle comprises the steps of: combining dry components: yeast, granulated sugar and potable water, mixing and leaving for 15 minutes in a warm area for the yeast to activate and to obtain a characteristic fermented odor, combining: a weighted texturate (volumetrically textured raw material) portion and liquid components, mixing for 10 minutes, product shaping, product baking during 30 - 60 minutes. The baking duration depends on the product type and weight (these parameters are also observed for standard breads), product cooling and packing. The basic cycle of dough making and shaping has a duration of about 30 minutes, followed by the bread delivery for baking. However, the standard procedure includes the steps of: starter dough fermenting (30 minutes to 24 hours), shaped product proofing prior to baking (15 to 120 minutes), followed by the bread delivery for baking.

The volumetrically textured raw material used in this example is a texturate derived from all-purpose wheat flour in the form of 2 to 6-mm granules having the porosity of 60% and bulk density of 150 kg/m³. A bakery product is produced by using all-purpose wheat flour as a binding agent, with the ratio between the flour and the volumetrically textured raw material of 50:50.

Herein, a finished product has a white, creamy or grayish tone color, an aroma and a flavor characteristic of wheat flour, a uniformly colored crust, not pale, not burnt. Crumb condition: baked through, quite soft to touch. The bread is uniformly porous without voids, has a crumb of high qualitative properties and gustatory qualities characteristic of yeast-leavened bread (ref. to Fig.1A).

### Example 2.

The production process cycle is similar to that described in Example 1 and includes using, as the volumetrically textured raw material, textured whole-grain wheat flour in the form of granules sized 2-6 mm, having the porosity of 55% and the bulk density of 180 kg/m³, taken in an amount of 30% of the total raw material amount. Herein, the finished product exhibits a good shape stability with uniform and characteristic porosity, has an off-white color with a creamy tone, an aroma and a flavor characteristic of whole-grain wheat flour, a uniformly colored crust, not pale, not burnt. Crumb condition: baked through, quite soft to touch. The bread is uniformly porous without voids, has a crumb of high qualitative properties and gustatory qualities characteristic of yeast-leavened wheat bread (ref. to Fig. 1E).

### Example 3.

The production process cycle is similar to that described in Example 1 and includes using, as the volumetrically textured raw material, textured whole-grain wheat flour containing 15% of wheat bran in the form of granules sized 5-7 mm, having the porosity of 50% and the bulk density of 120 kg/m³, taken in an amount of 20% of the total raw material amount. Herein, a finished product has a gray-white color and has a crumb of high qualitative properties, specifically: a creamy color tone, with a good shape stability and well-developed porosity without voids, with an aroma and a flavor characteristic of a whole-grain wheat flour, a uniformly colored crust, not pale, not burnt. Crumb condition: baked through, quite soft to touch. The bread has the gustatory qualities characteristic of yeast-leavened bread. By using wheat bran to produce the texturate, a finished product may be produced with an increased content of dietary fibers beneficial to the human health (ref. to Fig. 1B).

### Example 4.

The production process cycle is similar to that described in Example 1 and includes using, as the volumetrically textured raw material, textured whole-grain wheat flour containing 30% of wheat bran in the form of granules sized 3-5 mm, having the porosity of 68% and the bulk density of 100 kg/m³, taken in an amount of 60% of the total raw material amount. Herein, a finished product has a gray-white color with a creamy tone, an aroma and a flavor characteristic of whole-grain wheat flour, a uniformly colored crust, not pale, not burnt. Crumb condition: baked through, quite soft to touch. The bread exhibits a good shape stability, well-developed uniform porosity without voids and has a crumb of high qualitative properties, with gustatory qualities and a color characteristic of yeast-leavened bread. By using wheat bran to produce the volumetrically textured raw material, a finished product may be produced with an increased content of dietary fibers beneficial to the human health (ref. to Fig. 1C).

### Example 5.

The production process cycle is similar to that described in Example 1 and includes using, as the volumetrically textured raw material, textured whole-grain rye flour in the form of granules sized 2-6 mm, having the porosity of 52% and the bulk density of 170 kg/m³, taken in an amount of 50% of the total raw material amount, wherein no yeast is used; to provide distinctive organoleptic characteristics, a mixture of lactic, acetic and propionic acids with the mixture ratio of 3:1:1 is added in the total amount of 2% of the dough weight. Herein, a finished product has a grey color with a creamy tone, an aroma and a flavor characteristic of whole-grain rye flour, a uniformly colored crust, not pale, not burnt. Crumb condition: baked through, quite soft to touch. The bread has a characteristic rye flavor, a stable shape with well-developed porosity and a characteristic rye bread color, a uniform porosity without voids, has a crumb of high qualitative properties and gustatory qualities characteristic of a sourdough bread. By using a whole-grain rye flour to produce the texturate, a finished product may be produced with an increased content of dietary fibers beneficial to the human health, and the finished product's organoleptic properties may be changed to obtain a product with rye flavor familiar to consumers. It should be noted that products made from rye flour have a lower glycemic index and are recommended for those who want to maintain a healthy diet (ref. to Fig.1D).

### Example 6.

The production process cycle is similar to that described in Example 1 and includes using, as the volumetrically textured raw material, textured corn flour in the form of granules sized 2-5 mm, having the porosity of 50% and the bulk density of 190 kg/m³, taken in an amount of 30% of the total raw material amount. Herein, a finished product has a creamy color with a yellow tone, an aroma and a flavor characteristic of the products made from a combination of wheat and corn flours, a uniformly colored crust, not pale, not burnt. Crumb condition: baked through, quite soft to touch. The bread is uniformly porous without voids, has a crumb of high qualitative properties and gustatory qualities characteristic of yeast-leavened bread. By using corn flour to produce the volumetrically textured raw material, a finished product may be produced with an increased resistant starch content, providing a beneficial effect to digestive processes in consumers.

### Example 7.

The production process cycle is similar to that described in Example 1 and includes using, as the volumetrically textured raw material, textured pea flour in the form of granules sized 2-6 mm, having the porosity of 60% and the bulk density of 130 kg/m³, taken in an amount of 20% of the total raw material amount Herein, a finished product has a grey color with a creamy tone, an aroma and a flavor characteristic of a product made from a combination of pea and wheat flours, a uniformly colored crust, not pale, not burnt. Crumb condition: baked through, quite soft to touch. The bread is uniformly porous without voids, has a crumb of high qualitative properties and gustatory qualities characteristic of yeast-leavened bread. By using pea flour to produce the volumetrically textured raw material, a finished product may be produced with an increased protein content, since the protein content of textured groats and cereals is about 10-12 g/100 g, while that of textured pea flour is about 20 g/100 g.

### Example 8.

The production process cycle is similar to that described in Example 1 and includes using, as the volumetrically textured raw material, textured corn flour in the form of granules sized 3-5 mm, having the porosity of 42% and the bulk density of 180 kg/m³, taken in an amount of 40% of the total raw material amount, wherein the binder is a combination of rice and tapioca starches and xanthan gum in an amount of 0.5% of the total dry component content. Herein, a finished product has a creamy yellow color, an aroma and a flavor characteristic of corn flour, a uniformly colored crust, not pale, not burnt. Crumb condition: baked through, quite soft to touch. The bread is uniformly porous without voids, has a crumb of high qualitative properties and gustatory qualities characteristic of yeast-leavened bread. By using corn flour to produce the volumetrically textured raw material and rice and tapioca starches as binding agents, a gluten-free finished product may be produced, which is intended for consumption by those with wheat protein intolerance.

### Example 9.

The production process cycle is similar to that described in Example 1 and includes using, as the volumetrically textured raw material, textured whole-grain wheat flour in the form of granules sized 5-8 mm, having the porosity of 68% and the bulk density of 110 kg/m³, taken in an amount of 50% of the total raw material amount, wherein no yeast is used, and, to give flavor and aroma, a non-yeast starter made on the basis of wheat flour is added in an amount of 20% of the flour amount. Herein, a finished product has a white-grey color with a creamy tone, an aroma and a flavor characteristic of a bread produced with the use of non-yeast starter, a uniformly colored crust, not pale, not burnt. Crumb condition: baked through, quite soft to touch. The bread is uniformly porous without voids, has a crumb of high qualitative properties and gustatory qualities characteristic of sourdough bread. By using a non-yeast starter, organoleptic properties of a bakery product may be modified to bring them closer to those of conventional non-yeasted sourdough breads.

### Example 10.

The production process cycle is similar to that described in Example 1 and includes using, as the volumetrically textured raw material, textured barley flour in the form of granules sized 1-4 mm, having the porosity of 47% and the bulk density of 150 kg/m³, taken in an amount of 50% of the total raw material amount. Herein, a finished product has a white-grey color with a creamy tone, an aroma and a flavor characteristic of a combination of barley and wheat flours, a uniformly colored crust, not pale, not burnt. Crumb condition: baked through, quite soft to touch. The bread is uniformly porous without voids, has a crumb of high qualitative properties and gustatory qualities characteristic of yeast-leavened bread. By using barley flour to produce the volumetrically textured raw material, the finished product may be enriched with soluble (beta-glucan) and insoluble dietary fibers and minerals (calcium, potassium, chromium, phosphorus), while reducing postprandial glycaemia as compared with wheat flour breads.

### Example 11.

The production process cycle is similar to that described in Example 1 and includes using, as the volumetrically textured raw material, textured buckwheat flour in the form of granules sized 3-6 mm, having the porosity of 57% and the bulk density of 125 kg/m³, taken in an amount of 20% of the total raw material amount and further enriched with an apple powder, wherein the binding agent is a combination of rice and corn starches and flax meal. Herein, a finished product has a white-grey color with a creamy tone, an aroma and a flavor characteristic of buckwheat flour, a uniformly colored crust, not pale, not burnt. Crumb condition: baked through, quite soft to touch. The bread is uniformly porous without voids, has a crumb of high qualitative properties and gustatory qualities characteristic of yeast-leavened bread with pronounced apple notes. By using buckwheat flour to produce the volumetrically textured raw material and the binding agents based on rice and corn starches and flax meal, a gluten-free finished product may be produced, which is intended for consumption by those with wheat protein intolerance, while by using the apple powder, the finished product may be enriched with pectin, vitamins and minerals.

### Example 12.

The production process cycle is similar to that described in Example 1 and includes using, as the volumetrically textured raw material, textured rice flour in the form of granules sized 3-5 mm, having the porosity of 72% and the bulk density of 90 kg/m³, taken in an amount of 40% of the total raw material amount, wherein the binder is a combination of rice and tapioca starches and xanthan gum in an amount of 1.5% of the total dry component content, no yeast being used. Herein, a finished product has a white-creamy color, an aroma and a flavor characteristic of rice flour, a uniformly colored crust, not pale, not burnt. Crumb condition: baked through, quite soft to touch. The bread is uniformly porous without voids and has a crumb of high qualitative properties, with a delicate taste characteristic of Asian style rice-based products. By using rice flour to produce the volumetrically textured raw material and rice and tapioca starches as binding agents, a gluten-free finished product may be produced, which is intended for consumption by those with wheat protein intolerance.

### Example 13.

The production process cycle is similar to that described in Example 1 and includes using, as the volumetrically textured raw material, a texturate produced from rice and corn flours at a ratio of 50/50 in the form of granules sized 3-5 mm, having the porosity of 42% and the bulk density of 190 kg/m³, taken in an amount of 50% of the total raw material amount, wherein the binder is a combination of rice and tapioca starches and oatmeal beta-glucan in an amount of 1.0% of the total dry component content. Herein, a finished product has a white-yellow color, an aroma and a flavor characteristic of a combination of rice and corn flours, a uniformly colored crust, not pale, not burnt. Crumb condition: baked through, quite soft to touch. The bread is uniformly porous without voids, has a crumb of high qualitative properties and gustatory qualities characteristic of yeast-leavened bread. By using rice and corn flours to produce the volumetrically textured raw material and rice and tapioca starches as binding agents, a gluten-free finished product may be produced, which is intended for consumption by those with wheat protein intolerance.

### Example 14.

The production process cycle is similar to that described in Example 1 and includes using, as the volumetrically textured raw material, textured rice flour in the form of granules sized 3-5 mm, having the porosity of 55% and the bulk density of 115 kg/m³, taken in an amount of 30% of the total raw material amount. The bakery product is produced by using whole-grain rye flour as a binding agent, with the ratio between the flour and the volumetrically textured raw material of 30:70. Herein, rather than yeast, a lactic acid bacteria based starter is used in an amount of 15% of the flour amount. Herein, the finished product has color characteristic of rye bread with white inclusions, an aroma and a flavor characteristic of rye flour, a uniformly colored crust, not pale, not burnt. Crumb condition: baked through, quite soft to touch. The bread is uniformly porous without voids, has a crumb of high qualitative properties and gustatory qualities characteristic of sourdough bread. By using rice flour to produce the volumetrically textured raw material and whole-grain rye flour, a finished product may be produced with an increased content of dietary fibers beneficial to the human health, and the finished product's organoleptic properties may be changed to obtain a product with rye flavor familiar to consumers. It should be noted that, by using rye flour as a binding agent, a product with a lower glycemic index may be produced, which is recommended for consumption by those who want to maintain a healthy diet.

### Example 15.

The production process cycle is similar to that described in Example 1 and includes using, as the volumetrically textured raw material, a texturate made of a combination of rye and wheat flours at the ratio of 50:50 in the form of granules sized 1-4 mm, having the porosity of 62% and the bulk density of 105 kg/m³, taken in an amount of 60% of the total raw material amount. Whole-grain wheat flour is used as a binding agent, while a yeast extract is used as a flavoring agent in an amount of 0.5% of the dough weight. Herein, a finished product has a white-grey color with a creamy tone, an aroma and a flavor characteristic of a combination of rye and wheat flours, a uniformly colored crust, not pale, not burnt. Crumb condition: baked through, quite soft to touch. The bread is uniformly porous without voids, has a crumb of high qualitative properties and gustatory qualities characteristic of yeast-leavened bread. By using a rye and wheat texturate, a finished product may be produced with an increased fiber content and a unique flavor.

### Example 16.

The production process cycle is similar to that described in Example 1 and includes using, as the volumetrically textured raw material, textured hulled whole grains in the form of granules sized 0.3-0.5 mm, having the porosity of 30% and the bulk density of 350 kg/m3, taken in an amount of 10% of the total raw material amount, wherein a combination of tapioca starch and guar gum is used as a binding agent in an amount of 0.7% of the total dry component content. Herein, a finished product has a brown color, an aroma and a flavor characteristic of rye flour, a uniformly colored crust, not pale, not burnt. Crumb condition: baked through, quite soft to touch. The bread is uniformly porous without voids, has a crumb of high qualitative properties and gustatory qualities characteristic of yeast-leavened bread. By using rye flour to produce the volumetrically textured raw material and tapioca starch as a binding agent, a finished product may be produced with organoleptic properties characteristic of rye bread.

### Example 17.

The production process cycle is similar to that described in Example 1 and includes using, as the volumetrically textured raw material, textured spelt semolina sized 1-2 mm in the form of granules sized 0.5-1 mm, having the porosity of 80% and the bulk density of 300 kg/m3, taken in an amount of 70% of the total raw material amount, wherein lactic acid is used as a flavoring agent in an amount of 0.5% of the total dry component content. Herein, a finished product has an ecru color, an aroma and a flavor characteristic of spelt flour, a uniformly colored crust, not pale, not burnt. Crumb condition: baked through, quite soft to touch. The bread is uniformly porous without voids, has a crumb of high qualitative properties and gustatory qualities characteristic of yeast-leavened bread. By using spelt flour to produce the volumetrically textured raw material, a finished product may be produced with a reduced gluten content and, in combination with lactic acid, pronounced organoleptic properties may be obtained.

### Example 18.

The production process cycle is similar to that described in Example 1 and includes using, as the volumetrically textured raw material, textured spelt flour in the form of granules sized 0.5-1 mm, having the porosity of 80% and the bulk density of 300 kg/m³, taken in an amount of 70% of the total raw material amount, wherein lactic acid is used as a flavoring agent in an amount of 0.5% of the total dry component content. Herein, a finished product has an ecru color, an aroma and a flavor characteristic of spelt flour, a uniformly colored crust, not pale, not burnt. Crumb condition: baked through, quite soft to touch. The bread is uniformly porous without voids, has a crumb of high qualitative properties and gustatory qualities characteristic of yeast-leavened bread. By using spelt flour to produce the volumetrically textured raw material, a finished product may be produced with a reduced gluten content and, in combination with lactic acid, pronounced organoleptic properties may be obtained.

### Example 19.

The production process cycle is similar to that described in Example 1 and includes using, as the volumetrically textured raw material, textured wheat middlings sized 1-2 mm in the form of granules sized 8-10 mm, having the porosity of 35% and the bulk density of 50 kg/m3, taken in an amount of 65% of the total raw material amount and further enriched with a pumpkin powder. Herein, a finished product has a creamy yellow color, an aroma and a flavor characteristic of wheat flour with pumpkin notes, a uniformly colored crust, not pale, not burnt. Crumb condition: baked through, quite soft to touch. The bread is uniformly porous without voids, has a crumb of high qualitative properties and gustatory qualities characteristic of yeast-leavened bread. By using wheat flour to produce the volumetrically textured raw material in combination with a pumpkin powder, a finished product enriched with dietary fibers and minerals may be produced and provided with pronounced distinctive organoleptic characteristics.

## Claims

1. A method of producing bread and bakery products, the method comprising: combining dry and liquid dough components, mixing, product shaping and baking, wherein, after having mixed the components, a texturate comprised of flour, semolina, grains or products of intermediate processing of cereals, legumes, oil bearing crops, dried vegetables, fruit and berries, or mixtures thereof is added to the dough in an amount of 10-80% of the dry components' weight, the texturate having a granular structure with a granule size of 0.3-10 mm, preferably 2-7 mm, with a pore volume constituting 30-80% of a granule's total volume, preferably 40-70%, and with a bulk density of 50-350 kg/m³, preferably 90-200 kg/m³.

2. The method of Claim 1, wherein the finished dough has a density of 470-1300 kg/m³.

3. The method of Claim 1, wherein yeast or non-yeast starter is further added to the dough to give it a flavor and aroma.

4. The method of Claim 1, wherein a raising agent is further added to the dough.

5. The method of Claim 1, wherein flour, semolina, grains, cereal bran, legume bran, oil bearing crop bran are used as the dry components with added dried vegetables, fruit and berries or a mixture thereof.

6. The method of Claim 1, wherein the dry components and the texturate are gluten containing.

7. The method of Claim 1, wherein the dry components and the texturate are gluten-free.

8. The method of Claim 1, wherein the texturate is produced with added coloring agents, flavoring components.

9. The method of Claim 1, wherein, prior to or after baking, the products are dusted with, and/or poured on with, and/or filled with flavor and aroma improving and/or modifying compounds, and wherein the products are scored to provide external decoration.
